# EUROPÄISCHE PATENTSCHRIFT

(11) **EP 3 787 972 B1**
(45) Veröffentlichungstag und Bekanntmachung des Hinweises auf die Patenterteilung: **24.12.2025**
(21) Anmeldenummer: 18726339.7
(22) Anmeldetag: 02.05.2018
(51) Int. Cl.: F24S 70/16

(54) **SOLARENERGIENUTZUNGSSYSTEM UND -VERFAHREN FÜR FLUGBETRIEBSFLÄCHEN**
SOLAR ENERGY UTILSATION SYSTEM AND METHOD FOR FLIGHT OPERATION AREAS
SYSTÈME ET PROCÉDÉ D'UTILISATION D'ÉNERGIE SOLAIRE POUR DES ZONES AÉROPORTUAIRES

(43) Veröffentlichungstag der Anmeldung: 10.03.2021
(60) Teilanmeldung: 25177037.6
(73) Patentinhaber: Weisser, Lutz, 14109 Berlin (DE)
(72) Erfinder: Weisser, Lutz, 14109 Berlin (DE)
(74) Vertreter: Maikowski & Ninnemann Patentanwälte Partnerschaft mbB
(86) Internationale Anmeldenummer: PCT/EP2018/061146
(87) Internationale Veröffentlichungsnummer: WO 2019/210942

(56) Entgegenhaltungen:
- CN-A- 105 016 639
- DE-A1- 102016 221 767
- DE-A1- 3 101 913
- DE-A1- 3 407 927
- DE-T2- 69 802 418
- FR-A1- 3 056 714
- US-A- 4 132 074
- US-A- 4 305 681
- DATABASE WPI Week 201606, Derwent World Patents Index; AN 2015-730711
- DATABASE WPI Section Ch Week 200815, 7 January 2019 Derwent World Patents Index; Class A93, AN 2008-C01281, XP002787685

## Beschreibung

Die Erfindung betrifft ein Solarenergienutzungssystem für Flugbetriebsflächen mit den Merkmalen der Anspruchs 1 und ein Solarenergienutzungsverfahren mit den Merkmalen des Anspruchs 7.

Der Betrieb von Flughäfen ist energieintensiv, da insbesondere große Räume in Terminals oder anderen Einrichtungen geheizt oder gekühlt werden müssen. Daher besteht die Aufgabe, eine energieeffiziente Ausstattung von Flughäfen bereitzustellen. Ein System aus diesem technischen Bereich ist aus der US A 4,132,074 bekannt.

Die Aufgabe wird durch ein Solarenergienutzungssystem mit den Merkmalen des Anspruchs 1 gelöst.

Es geht dabei um ein Solarenergienutzungssystem für Flugbetriebsflächen, nämlich Vorfelder. Flugbetriebsflächen ist gemeinsam, dass sie über eine feste Oberfläche, meistens aus Beton, verfügen. Die Flugbetriebsflächen müssen weltweit bestimmte Mindestvoraussetzungen, insbesondere hinsichtlich der Dicke und der Belastbarkeit, einhalten. In jedem Fall stehen große Flächen, und damit auch große Massen z.B. an Beton, zur Verfügung, auf die Sonnenstrahlung einwirkt.

Im Rahmen des Solarenergienutzungssystems dient eine Wärmequellenvorrichtung zur Entziehung von Wärmenergie, die von Sonneneinstrahlung induziert ist, aus dem Material oder dem Materialverbund der Flugbetriebsfläche.

Die gewonnene Wärme aus den Flugbetriebsflächen kann durch mindestens eine weitere Vorrichtung weiter verarbeitet werden, wobei unterschiedliche Vorrichtungen auch miteinander kombinierbar sind.

So dient z.B. mindestens eine Wärmespeichervorrichtung der zeitweisen Speicherung der Wärmeenergie.

Mindestens eine Heizvorrichtung kann z.B. zur Beheizung mindestens eines Gebäudes, insbesondere eines Flughafengebäudes dienen.

Mittels einer Kühlvorrichtung, z.B. unter Verwendung einer Absorptionskältevorrichtung in Verbindung mit einer Wärmepumpenvorrichtung, kann eine Kühlmöglichkeit bereitgestellt werden. Damit ist es z.B. möglich, die eingestrahlte Sonnenwärme so umzusetzen, dass Kühlenergie z.B. für ein Flughafengebäude bereitgestellt wird. Da die Anforderung an die Kühlleistung in der Regel dann am höchsten ist, wenn auch die Sonneneinstrahlung stark ist, kann mit dieser Kombination ein Flughafensystem thermisch effizient zeitsynchron betrieben werden.

Auch kann die Wärmenergie in mindestens einer Stromerzeugungsvorrichtung verwendet werden.

Mindestens eine Wärmepumpenvorrichtung kann zur Temperaturerhöhung der mit der Wärmequellenvorrichtung gewonnenen Wärmeenergie dienen. Durch die Temperaturanhebung kann der Nutzwert der Wärme gesteigert werden.

Durch die Verwendung der Wärmequellenvorrichtung wird eine bisher thermisch ungenutzte Fläche der Flugbetriebsflächen - und damit eine sehr große Masse - einer thermischen Auswertung zugänglich gemacht. Da durch die Sonneneinstrahlung nur bestimmte Temperaturwerte erreichbar sind, kann mit Hilfe der mindestens einen Wärmepumpenvorrichtung thermisch wertvollere Energie erzeugt werden, die dann für eine weitere Nutzung zur Verfügung gestellt werden kann.

Erfindungsgemäß weist die Wärmequellenvorrichtung ein Rohrsystem, insbesondere ein Kapillarrohrsystem auf, wobei im Betrieb als im Rohrsystem strömendes Wärmemedium ein Wasser-Glykol Gemisch verwendet wird. Solche Rohrsysteme können einfach verlegt werden und sind hinreichend wartungsarm.

Dabei durchzieht in einer Ausführungsform das Rohrsystem der Wärmequellenvorrichtung mindestens einen Teil der Flugbetriebsfläche, insbesondere mäanderförmig. Mäanderförmig bedeutet hier, dass z.B. ein Rohr in bestimmten Abständen seine Richtung - meist in einem regelmäßigen Muster - ändert, um so einen Bereich der Flugbetriebsfläche systematisch zu durchziehen. Auch mehrere Rohre können zur Flächenabdeckung mäanderförmig angeordnet sein. Die Rohre des Rohrsystems können dabei einen Durchmesser zwischen 2 und 10 cm aufweisen und / oder die Rohre weisen in Abschnitten, in denen sie parallel zueinander angeordnet sind, einen Abstand zwischen 5 und 100 cm, insbesondere zwischen 5 und 20 cm auf. Erfindungsgemäß sind die Rohre des Rohrsystems im Mittel zwischen 5 und 15 cm unterhalb der Oberfläche der Flugbetriebsfläche angeordnet. Häufig wird eine schichtenmittige Anordnung des Rohrsystems in der Betondecke der Flugbetriebsfläche sinnvoll sein.

In einer weiteren Ausführungsform weist die Wärmespeichervorrichtung mindestens einen sensiblen Wärmespeicher, insbesondere einen Massivabsorber, mindestens einen latenten Wärmespeicher und / oder mindestens einen thermochemischen Wärmespeicher auf. Dabei kann in einer Ausführungsform Wasser in einem sensiblen Wärmespeicher und / oder in einer latenten Wärmespeichervorrichtung, insbesondere in einem Eisspeicher, verwendet werden.

Ferner weist in einer Ausführungsform die mindestens eine Wärmepumpenvorrichtung eine Kompressions-Wärmepumpe, eine Absorptions-Wärmepumpe oder eine Adsorptions-Wärmepumpe auf.

Um die Sonnenstrahlung auf die Flugbetriebsfläche effizient zu nutzen, weist die Flugbetriebsfläche, als das Vorfeld zur Erhöhung der Wärmeabsorption erfindungsgemäß mindestens teilweise eine reflexionsmindernde Beschichtung oder Farbe auf, insbesondere für kurzwellige Strahlung und einen Reflexionsgrad von kleiner 25% bei Beton.

Erfundungsgemäß weist das Material oder der Materialverbund der Flugbetriebsfläche Beton auf, wobei die Dicke der Flugbetriebsfläche, der die Wärmequellenvorrichtung Wärmenergie entzieht, zwischen 20 cm und 80 cm, insbesondere zwischen 30 und 40 cm, beträgt.

Auch kann in einer Ausführungsform des Solarenergienutzungssystems die mindestens eine Wärmespeichervorrichtung Wärmenergie mindestens teilweise an ein Nah- oder Fernwärmenetz abgeben.

Die Aufgabe wird auch durch ein Solarenergienutzungsverfahren mit den Merkmalen des Anspruchs 7 gelöst. Als Ausführungsformen können hier Wärmespeichervorrichtungen oder Kühlvorrichtungen jeweils in Verbindung mit einer Wärmepumpenvorrichtung verwendet werden.

Beispielhafte Ausführungsformen für das Solarenergienutzungssystem und das Solarenergienutzungsverfahren werden anhand der folgenden Figuren beschrieben. Dabei zeigt
- Fig. 1: eine schematische Darstellung eines Flughafens mit Flugbetriebsflächen;
- Fig. 2: eine schematische Darstellung des Prinzips einer Ausführungsform einer Solarenergienutzungsvorrichtung;
- Fig. 3: eine schematische Darstellung einer ersten Ausführungsform der Solarenergienutzungsvorrichtung und des Solarenergienutzungsverfahrens für eine Flugbetriebsfläche;
- Fig. 4: eine schematische Darstellung einer zweiten Ausführungsform der Solarenergienutzungsvorrichtung und des Solarenergienutzungsverfahrens für eine Flugbetriebsfläche;
- Fig. 5: eine schematische Schnittansicht durch eine Flugbetriebsfläche.

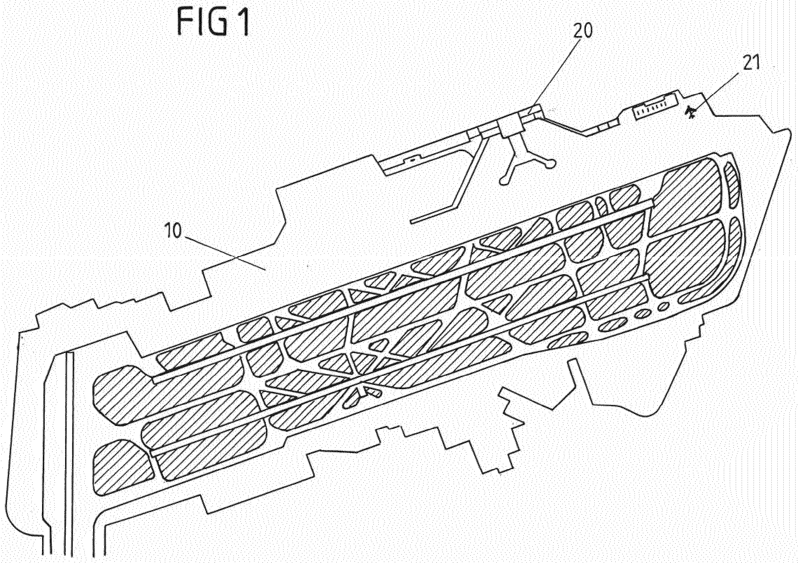

In Fig. 1 ist in einer Draufsicht schematisch ein Flughafen mit einem Flughafengebäude 20 dargestellt. Die Flugzeuge 21 bewegen sich auf Flugbetriebsflächen 10, wie z.B. Rollbahnen, Vorfeldern (umfassend Aprons und Ramps), Startbahnen, Landebahnen, oder Freiflächen.

Typischerweise sind die Flugbetriebsflächen 10 mit einer Decke aus Beton versehen, wobei bei Flughäfen die vom Beton bedeckten Fläche in der Größenordnung von 10⁵ bis 10⁶ m² liegen. Diese Flugbetriebsflächen 10 sind direkter oder diffuser Sonnenstrahlung S ausgesetzt, so dass sich die Flugbetriebsflächen 10 im Laufe eines Tages erwärmen. Dabei können die Flugbetriebsflächen 10 Temperaturen von mehr als 60°C erreichen.

Die Menge der im Jahresmittel eingestrahlten Energie hängt u.a. von der geographischen Lage des Flughafens ab.

Die flächenbezogene solare Energiestrahlung ist bis zur Atmosphäre weitgehend konstant (1.368 W/m²). Durch atmosphärische Reflexion, Streuung und Absorption vermindert sich die Einstrahlung auf dem Erdboden jedoch. Für Berlin (52° nördliche Breite) beträgt die Strahlungsleistung im Mittel 125 W/m². Die Globalstrahlung als mittlere Jahressumme beträgt in Deutschland zwischen 900 kWh/m² an der Küste und 1.200 kWh/m² in Süddeutschland. In Regionen um den Äquator beträgt die Globalstrahlung bis zu 2.500 kWh/m², d.h. sie ist mehr als doppelt so hoch wie in Deutschland.

Die großen Flächen der Flughafenbetriebsflächen 10 und die relevante Sonneneinstrahlung S auf die Flughafenbetriebsflächen 10 tragen somit erhebliche Mengen an Wärmeenergie in das Material ein. Die Wärmeenergie kann mit den in der Folge beschriebenen Ausführungsformen eines Solarenergienutzungssystems oder eines Solarenergienutzungsverfahren nutzbar gemacht werden.

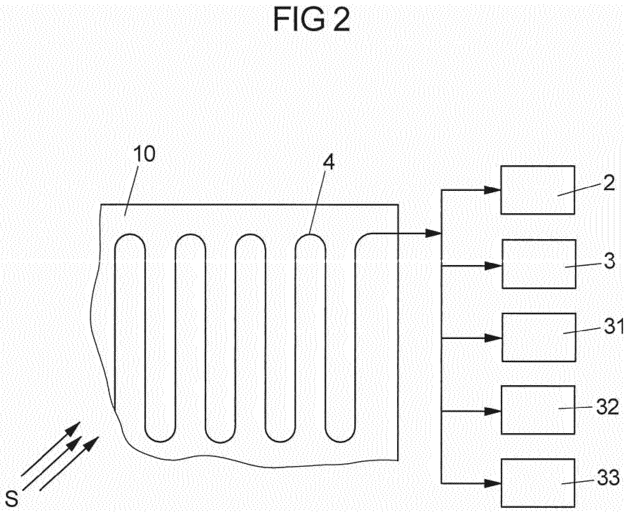

In einer Draufsicht ist in Fig. 2 ein Rohrsystem 4 als Wärmequellenvorrichtung innerhalb einer Flugbetriebsfläche 10 dargestellt. Das Rohrsystem 4 weist hier ein einziges mäanderförmig verlegtes Rohr aus Polyethylen auf. Die mäanderförmige Anordnung ist hier als eine Art Schlangenmuster ausgebildet, d.h. das Rohr ändert in regelmäßigen Abständen seine Richtung, wobei längere Abschnitte des Rohres parallel zu einander liegen. Grundsätzlich sind auch andere Formen der Rohrverlegung möglich.

Die Flugbetriebsfläche 10 wird durch Sonneneinstrahlung S aufgeheizt.

Das Rohrsystem 4 wird hier von einer Wasser-Glykolmischung (z.B. 61% Wasser - 39% Glykol) als Wärmemedium durchströmt. Durch die Sonneneinstrahlung S erhitzt sich das Wärmemedium im Material (oder im Materialverbund) der Flugbetriebsfläche 10.

Das erhitzte Wärmemedium kann dann mit einer Reihe von unterschiedlichen Vorrichtungen weiterverwendet werden.

In Fig. 2 ist das Prinzip dargestellt, nach dem das Wärmemedium
- mindestens einer Wärmespeichervorrichtung 3 zur zeitweisen Speicherung der Wärmeenergie,
- mindestens einer Heizvorrichtung 31 zur Beheizung mindestens eines Gebäudes, insbesondere eines Flughafengebäude,
- mindestens einer Kühlvorrichtung 32,
- mindestens einer Stromerzeugungsvorrichtung 33 und / oder
- mindestens einer Wärmpumpenvorrichtung 2 zugeführt werden kann.

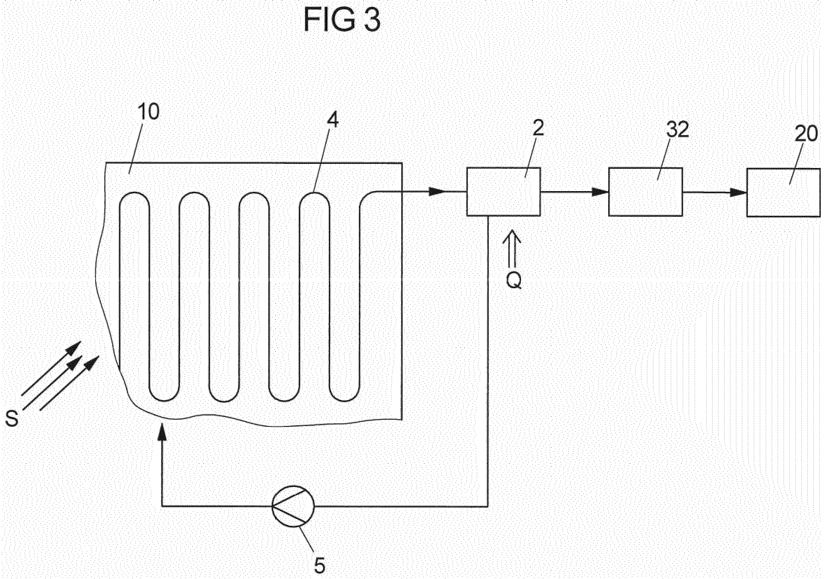

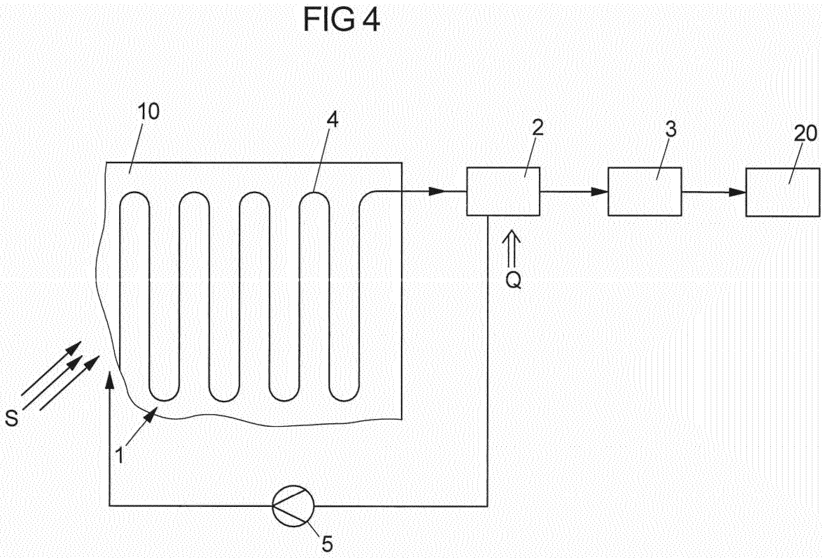

Die hier genannten Vorrichtungen werden dabei in der Regel nicht einzeln verwendet. In den Fig. 3 und 4 sind beispielhaft einige Kombinationsmöglichkeiten dargestellt, wobei der Teil der Wärmequellenvorrichtung mit dem Rohrsystem 4 der Ausführungsform gemäß Fig. 2 entspricht, so dass auf die entsprechende Beschreibung Bezug genommen werden kann.

In der Ausführungsform gemäß Fig. 3 wird das Wärmemedium einer Wärmepumpenvorrichtung 2 zur Temperaturerhöhung zugeführt, da die Ausgangstemperatur des Wärmemediums aus der Flugbetriebsfläche 10 relativ niedrig ist. Durch die Erhöhung der Temperatur wird der Nutzwert der Wärmeenergie gesteigert, wobei diese Steigerung durch eine externe Energiezufuhr Q bewirkt wird. Das Wärmemedium wird nach der Abgabe der Wärmeenergie in der Wärmepumpenvorrichtung 2 über eine Pumpe 5 wieder zum Rohrsystem 4 der Flugbetriebsfläche 10 gepumpt.

Mit dem nun relativ heißen Wärmemedium wird dann eine Absorptionswärmevorrichtung als Kühlvorrichtung 32 betrieben. Die dabei generierte Kühlenergie kann zur Klimatisierung eines Flughafengebäudes 20 verwendet werden. Dabei würde ausgenutzt werden, dass die geforderte Kühlleistung in der Regel dann hoch ist, wenn die Sonneneinstrahlung hoch ist. Man bräuchte keinen Wärmespeicher, da thermischen Vorgänge des Aufheizens und des Kühlens zeitlich synchron erfolgen.

In Fig. 4 ist eine weitere Ausführungsform dargestellt. Die von der Wärmepumpenvorrichtung 2 bereitgestellte Wärmeenergie wird hier nicht sofort verbraucht. Sie wird von der Wärmepumpenvorrichtung 2 zu mindestens einer Wärmespeichervorrichtung 3 zur zeitweisen Speicherung der Wärmeenergie geführt. Die Wärmespeichervorrichtung 3 kann dann die Wärmeenergie zu einer vorbestimmten Zeit an einen Verbraucher abgeben. Eine mögliche Verwendung ist die Abgabe zu Heizzwecken an das Flughafengebäude 20.

Eine Wärmespeichervorrichtung 3 ist eine energietechnische Einrichtung, welche die drei folgenden Prozesse aufweist: Einspeichern (Laden), Speichern und Ausspeichern (Entladen).

Bei einer sensiblen Wärmespeichervorrichtung 3 für thermische Energie erfolgt eine fühlbare Änderung der Temperatur der Wärmespeichervorrichtung 3. Ein Speichermedium wird erhitzt oder abgekühlt. Die Menge der gespeicherten Energie ist abhängig von der spezifischen Wärmekapazität des Stoffes. Da bei sensiblen Wärmespeichervorrichtungen 3 die Temperaturdifferenzen zwischen Speichermedium und Umgebung in der Regel größer sind als bei den anderen Speicherarten, spielt hier die Wärmedämmung eine große Rolle. Da Wasser eine hohe spezifische Wärmekapazität hat und über weitere Vorteile wie eine gute Umweltverträglichkeit, eine hohe Verfügbarkeit und geringe Kosten verfügt, werden viele sensible Wärmespeicher mit Wasser betrieben. Alternativ können auch Sand, Kies, Gestein (z.B. Granit), Beton, Ziegelsteine, Eisen, Thermoöl, eine Kies-Wasser Schüttung, Salzschmelze oder Natrium verwendet werden.

Im Zusammenhang mit Flugbetriebsflächen 10 kann ein Teil der Flugbetriebsfläche 10 als Wärmespeichervorrichtung 3 mit Beton als Speichermedium verwendet werden. Dies ist auf Grund der vorhandenen großen Betonmassen möglich.

Bei latenten Wärmespeichervorrichtungen 3 wird zusätzlich zur sensiblen Wärme die für einen Phasenwechsel notwendige Energie gespeichert. In der Praxis wird üblicherweise der Phasenübergang fest - flüssig genutzt. Dabei können Phasenwechelmedien, wie z.B. Wasser, Salzhydrate, Salze, Salzmischungen, Paraffin, Fettsäuren, Zuckeralkohol oder PEG, verwendet werden.

Ein Eisspeicher ist eine Möglichkeit für eine latente Wärmespeichervorrichtung 3. Dabei wird die hohe Kristallisationsenergie ausgenutzt, die beim Phasenübergang von 0° C kaltem Wasser zu 0°C kaltem Eis freigesetzt wird. Diese Energie reicht aus, um Wasser von 0 °C auf 80 °C zu erhitzen. Ein solches Volumen kann z.B. unterhalb der Wärmequellenvorrichtung 1, d.h. dem Beton der Flugbetriebsfläche 10, angeordnet werden.

Bei einer thermochemischen Wärmespeichervorrichtung 3 werden chemisch reversible Reaktionen (z.B. unter Verwendung von Silikagelen oder Metallhydriden) verwendet, bei denen die Reaktionsprodukte getrennt und über lange Zeit gespeichert werden können. Durch die Trennung treten keine Speicherverluste auf. Erst bei der Entladung gibt die exotherme Reaktion die gespeicherte Energie wieder frei. Thermochemische Energiespeicher erlauben sehr hohe Energiespeicherdichten.

Grundsätzlich ist es möglich, dass mehrere und auch unterschiedliche Wärmespeichervorrichtungen 3 miteinander kombiniert werden. Auch ist es möglich, die Wärmespeichervorrichtung 3 des Solarenergienutzungssystems für Flugbetriebsflächen 10 mit einer Solarzellenanlage zu koppeln.

Eine Energiebilanzierung eines Solarenergienutzungssystems für eine Flugbetriebsfläche 10 mit einer Fläche von 10.000 m² in Berlin oder einem vergleichbaren geografischem Ort ergibt z.B. in einem Jahr eine Energie von 3.263 MWh.

Für die thermischen Eigenschaften des Materials der Flugbetriebsflächen 10 (z.B. Beton) spielen die Materialparameter Wärmeleitfähigkeit, Wärmekapazität, Temperaturleitzahl (d.h. Verhältnis von Wärmeleitfähigkeit und Wärmekapazität) und / oder der Reflexionskoeffizient eine Rolle.

Bei Beton hängt die Wärmeleitfähigkeit vom Hydratationsgrad, dem Feuchtegehalt, der Gesteinskörnung, der Porenart und dem Porengehalt ab.

In einer Ausführungsform wird ein Beton C35/45 (E=34.000 N/mm², Poissonzahl = 0,15, Wärmeleitfähigkeit 2,3 W/mK, Wärmekapazität 1.000 J/KgK, Rohdichte 2.300 kg/m³) mit einer Dicke von 40 cm verwendet. Bei einer durchaus üblichen Flugbetriebsfläche 10 mit einer Größe von 300.000 m² ergibt das ein Betonvolumen von 120.000 m³ mit einer Masse von 276.000 t.

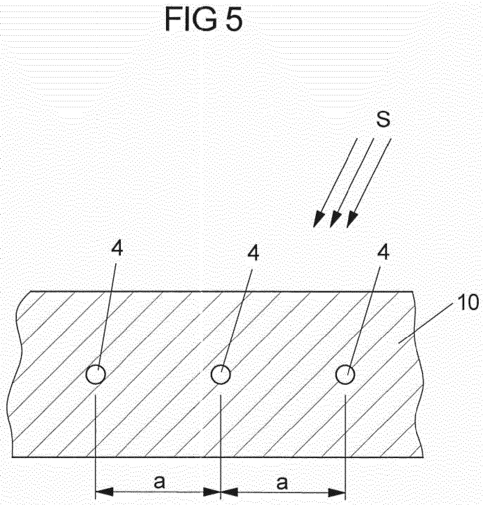

In Fig. 5 ist eine Schnittansicht durch eine Flugbetriebsfläche 10 dargestellt, in der drei geschnittene Rohre des Rohrsystems 4 dargestellt sind. Der mittlere Abstand a zwischen zwei der mäanderförmig verlegten Rohre (siehe Fig. 2) beträgt 15 cm. Die Rohre des Rohrsystems 4 sind hier in einer Ebene verlegt. Grundsätzlich ist es auch möglich, dass die Rohre mindestens teilweise in unterschiedlichen Ebenen verlegt sind.

Erfindungsgemäß werden die Rohre ca. 5 bis 15 cm unterhalb der Oberfläche verlegt werden, d.h. in etwa schichtenmittig.

Die Rohre sind in der Ausführungsform gemäß Fig. 5 äquidistant verlegt, was nicht zwingend ist. Es ist möglich die Anordnung der Rohre entsprechend den baulichen und / oder wärmetechnischen Anforderungen anzupassen.

### Bezugszeichenliste

- 1: Wärmequellenvorrichtung
- 2: Wärmepumpenvorrichtung
- 3: Wärmespeichervorrichtung
- 4: Rohrsystem
- 5: Pumpe

- 10: Flugbetriebsfläche eines Flughafens

- 20: Flughafengebäude
- 21: Flugzeug

- 31: Heizvorrichtung
- 32: Kühlvorrichtung
- 33: Stromerzeugungsvorrichtung

- a: mittlerer Abstand zwischen Rohren
- Q: Wärmezufuhr
- S: Sonneneinstrahlung

## Patentansprüche

1. Solarenergienutzungssystem für Flugbetriebsflächen (10), nämlich Vorfelder eines Flughafens,
umfassend
eine Wärmequellenvorrichtung (1) zur Entziehung von Sonneneinstrahlung induzierter Wärmeenergie aus dem Material oder Materialverbund eines Vorfeldes (10) und
mindestens eine Wärmespeichervorrichtung (3) zur zeitweisen Speicherung der Wärmeenergie,
mindestens eine Heizvorrichtung (31) zur Beheizung mindestens eines Gebäudes, insbesondere eines Flughafengebäude,
mindestens eine Kühlvorrichtung (32),
mindestens eine Stromerzeugungsvorrichtung (33) und / oder
mindestens eine Wärmepumpenvorrichtung (2) zur Temperaturerhöhung der mit der Wärmequellenvorrichtung (1) gewonnenen Wärmeenergie und wobei die Wärmequellenvorrichtung (1) ein Rohrsystem, insbesondere ein Kapillarrohrsystem aufweist, wobei im Betrieb als im Rohrsystem strömendes Wärmemedium ein Wasser-Glykol Gemisch verwendet wird, dass die Rohre (4) des Rohrsystems im Mittel zwischen 5 und 15 cm unterhalb der Oberfläche des Vorfeldes (10) angeordnet ist und
wobei
das Material oder der Materialverbund des Vorfeldes (10) Beton aufweist, wobei die Dicke des Vorfeldes (10), der die Wärmequellenvorrichtung (1) Wärmenergie entzieht, zwischen 20 cm und 80 cm, insbesondere zwischen 30 und 40 cm, beträgt und
zur Erhöhung der Wärmeabsorption des Vorfeldes (10) mindestens teilweise eine reflexionsmindernde Beschichtung oder Farbe aufweist, insbesondere für kurzwellige Strahlung und einen Reflexionsgrad von kleiner 25% bei Beton.

2. Solarenergienutzungssystem nach Anspruch 1, **dadurch gekennzeichnet, dass** das Rohrsystem (4) der Wärmequellenvorrichtung (1) mindestens einen Teil des Vorfeldes (10) insbesondere mäanderförmig durchzieht, wobei die Rohre des Rohrsystems einen Durchmesser zwischen 2 und 10 cm aufweisen und / oder das mäanderförmig angeordnete Rohr oder die Rohre (4) des Rohrsystems weisen in Abschnitten, in denen sie parallel zueinander angeordnet sind, einen Abstand zwischen 5 und 100 cm, insbesondere zwischen 5 und 20 cm auf.

3. Solarenergienutzungssystem nach mindestens einem der vorhergehenden Ansprüche, **dadurch gekennzeichnet, dass** die mindestens eine Wärmespeichervorrichtung (3) mindestens einen sensiblen Wärmespeicher, insbesondere einen Massivabsorber, mindestens einen latenten Wärmespeicher und / oder mindestens einen thermochemischen Wärmespeicher aufweist.

4. Solarenergienutzungssystem nach Anspruch 3, **dadurch gekennzeichnet, dass** Wasser in einem sensiblen Wärmespeicher und / oder in einer latenten Wärmespeichervorrichtung (3), insbesondere einem Eisspeicher, verwendet wird.

5. Solarenergienutzungssystem nach mindestens einem der vorhergehenden Ansprüche, **dadurch gekennzeichnet, dass** die mindestens eine Wärmepumpenvorrichtung (2) eine Kompressions-Wärmepumpe, eine Absorptions-Wärmepumpe oder eine Adsorptions-Wärmepumpe aufweist.

6. Solarenergienutzungssystem nach mindestens einem der vorhergehenden Ansprüche, **dadurch gekennzeichnet, dass** die mindestens eine Wärmespeichervorrichtung (3) Wärmenergie mindestens teilweise an ein Nah- oder Fernwärmenetz abgibt.

7. Solarenergienutzungsverfahren für Flugbetriebsflächen (10), nämlich Vorfelder,
wobei
eine Wärmequellenvorrichtung (1) durch Sonneneinstrahlung induzierte Wärmeenergie aus dem Material oder Materialverbund des Vorfeldes (10) entzieht, und anschließend mindestens
eine Speicherung in einer Wärmespeichervorrichtung (3) zur zeitweisen Speicherung der Wärmeenergie,
eine Heizvorrichtung (31) zur Beheizung mindestens eines Gebäudes, insbesondere eines Flughafengebäude betrieben wird,
eine Kühlvorrichtung (32) betrieben wird
eine Stromerzeugungsvorrichtung (33) betrieben wird und / oder
eine Wärmepumpenvorrichtung (2) zur Temperaturerhöhung der mit der Wärmequellenvorrichtung (1) gewonnenen Wärmeenergie betrieben wird, und wobei die Wärmequellenvorrichtung (1) ein Rohrsystem, insbesondere ein Kapillarrohrsystem aufweist, wobei im Betrieb als im Rohrsystem strömendes Wärmemedium ein Wasser-Glykol Gemisch verwendet wird, dass die Rohre (4) des Rohrsystems im Mittel zwischen 5 und 15 cm unterhalb der Oberfläche des Vorfeldes (10) angeordnet ist und
das Material oder der Materialverbund des Vorfeldes (10) Beton aufweist, wobei die Dicke des Vorfeldes, der die Wärmequellenvorrichtung (1) Wärmenergie entzieht, zwischen 20 cm und 80 cm, insbesondere zwischen 30 und 40 cm, beträgt und
zur Erhöhung der Wärmeabsorption die Flugbetriebsfläche (10) mindestens teilweise eine reflexionsmindernde Beschichtung oder Farbe aufweist, insbesondere für kurzwellige Strahlung und einen Reflexionsgrad von kleiner 25% bei Beton.

8. Solarenergienutzungsverfahren nach Anspruch 7, **dadurch gekennzeichnet, dass** das Temperaturniveau der entzogenen Wärmeenergie mit einer Wärmepumpenvorrichtung (2) angehoben wird und die Wärmeenergie auf dem angehobenen Temperaturniveau mindestens einer Wärmespeichervorrichtung (3) zur zeitweisen Speicherung der Wärmeenergie zugeführt wird.

9. Solarenergienutzungsverfahren nach Anspruch 7, **dadurch gekennzeichnet, dass** das Temperaturniveau der entzogenen Wärmeenergie mit einer Wärmepumpenvorrichtung (2) angehoben wird und die Wärmeenergie einer Kühlvorrichtung (32), insbesondere einer Absorptionswärmevorrichtung zugeführt wird.

## Claims

1. A solar energy utilization system for flight operation areas (10), namely aprons of an airport,
comprising
a heat source device (1) for extracting thermal energy induced by solar radiation from the material or material composite of an apron (10) and
at least one heat storage device (3) for the temporary storage of thermal energy,
at least one heating device (31) for heating at least one building, in particular an airport building,
at least one cooling device (32),
at least one power generating device (33) and/or
at least one heat pump device (2) for increasing the temperature of the thermal energy obtained with the heat source device (1), and wherein the heat source device (1) includes a tube system, in particular a capillary tube system, wherein a water/glycol mixture is used in operation as the heat medium flowing in the tube system, the tubes (4) of the tube system being arranged on average between 5 and 15 cm below the surface of the apron (10), and
wherein the material or material composite of the apron (10) includes concrete, wherein the thickness of the apron (10), from which the heat source device (1) extracts thermal energy, is between 20 cm and 80 cm, in particular between 30 and 40 cm, and
to increase the heat absorption of the apron (10) at least partially includes a reflection-reducing coating or paint, in particular for short-wave radiation and a degree of reflection of less than 25% for concrete.

2. The solar energy utilization system according to claim 1, **characterized in that** the tube system (4) of the heat source device (1) passes through at least part of the apron (10), in particular in a meandering manner, wherein the tubes of the tube system have a diameter of between 2 and 10 cm and/or the tube or tubes (4) of the tube system arranged in a meandering manner have a spacing of between 5 and 100 cm, in particular between 5 and 20 cm, in sections in which they are arranged parallel to each other.

3. The solar energy utilization system according to at least one of the preceding claims, **characterized in that** the at least one heat storage device (3) includes at least one sensible heat reservoir, in particular a solid absorber, at least one latent heat reservoir and/or at least one thermochemical heat reservoir.

4. The solar energy utilization system according to claim 3, **characterized in that** water is used in a sensible heat reservoir and/or in a latent heat storage device (3), in particular an ice storage device.

5. The solar energy utilization system according to at least one of the preceding claims, **characterized in that** the at least one heat pump device (2) includes a compression heat pump, an absorption heat pump or an adsorption heat pump.

6. The solar energy utilization system according to at least one of the preceding claims, **characterized in that** the at least one heat storage device (3) delivers thermal energy at least partially to a local or district heating network.

7. A solar energy utilization method for flight operation areas (10), namely aprons, wherein
a heat source device (1) extracts thermal energy induced by solar radiation from the material or material composite of the apron (10), and subsequently at least
a storage in a heat storage device (3) for the temporary storage of thermal energy,
a heating device (31) for heating at least one building, in particular an airport building is operated,
a cooling device (32) is operated,
a power generating device (33) is operated and/or
a heat pump device (2) is operated for increasing the temperature of the thermal energy obtained with the heat source device (1), and wherein the heat source device (1) includes a tube system, in particular a capillary tube system, wherein a water/glycol mixture is used in operation as the heat medium flowing in the tube system, the tubes (4) of the tube system being arranged on average between 5 and 15 cm below the surface of the apron (10), and
the material or the material composite of the apron (10) includes concrete, wherein the thickness of the apron, from which the heat source device (1) extracts thermal energy, is between 20 cm and 80 cm, in particular between 30 and 40 cm, and
to increase the heat absorption of the flight operation area (10) at least partially has a reflection-reducing coating or paint, in particular for short-wave radiation and a degree of reflection of less than 25% for concrete.

8. The solar energy utilization method according to claim 7, **characterized in that** the temperature level of the extracted thermal energy is raised with a heat pump device (2) and the thermal energy at the raised temperature level is supplied to at least one heat storage device (3) for the temporary storage of the thermal energy.

9. The solar energy utilization method according to claim 7, **characterized in that** the temperature level of the extracted thermal energy is raised with a heat pump device (2) and the thermal energy is supplied to a cooling device (32), in particular to an absorption heat device.

## Revendications

1. Système d'utilisation d'énergie solaire pour des zones aéroportuaires (10), à savoir des aires de stationnement d'un aéroport,
comprenant
un dispositif de source de chaleur (1) pour extraire de l'énergie thermique induite par le rayonnement solaire du matériau ou matériau composite d'une aire de stationnement (10) et
au moins un dispositif de stockage de chaleur (3) pour stocker temporairement l'énergie thermique,
au moins un dispositif de chauffage (31) pour chauffer au moins un bâtiment, en particulier un bâtiment d'aéroport,
au moins un dispositif de refroidissement (32),
au moins un dispositif de production d'électricité (33) et/ou
au moins un dispositif de pompe à chaleur (2) pour augmenter la température de l'énergie thermique obtenue avec le dispositif de source de chaleur (1) et le dispositif de source de chaleur (1) présentant un système de tuyaux, en particulier un système de tuyaux capillaires, un mélange eau-glycol étant utilisé en fonctionnement comme fluide thermique circulant dans le système de tuyaux, les tuyaux (4) du système de tuyaux étant disposés en moyenne entre 5 et 15 cm en dessous de la surface de l'aire de stationnement (10), et
dans lequel le matériau ou le matériau composite de l'aire de stationnement (10) comprend du béton, l'épaisseur de l'aire de stationnement (10), dont le dispositif de source de chaleur (1) extrait l'énergie thermique, étant comprise entre 20 cm et 80 cm, en particulier entre 30 et 40 cm, et
pour augmenter l'absorption de chaleur de l'aire de stationnement (10), présente au moins partiellement un revêtement ou une peinture réduisant la réflexion, en particulier pour le rayonnement à ondes courtes et un degré de réflexion inférieur à 25% pour le béton.

2. Système d'utilisation de l'énergie solaire selon la revendication 1, **caractérisé en ce que** le système de tuyaux (4) du dispositif de source de chaleur (1) traverse au moins une partie de l'aire de stationnement (10), en particulier en forme de méandres, les tuyaux du système de tuyaux présentant un diamètre compris entre 2 et 10 cm et/ou le tuyau ou les tuyaux (4) du système de tuyaux disposés en forme de méandres présentent, dans des sections dans lesquelles ils sont disposés parallèlement les uns aux autres, un écart compris entre 5 et 100 cm, en particulier entre 5 et 20 cm.

3. Système d'utilisation de l'énergie solaire selon au moins l'une quelconque des revendications précédentes, **caractérisé en ce que** ledit au moins un dispositif de stockage de chaleur (3) présente au moins un accumulateur de chaleur sensible, en particulier un absorbeur massif, au moins un accumulateur de chaleur latente et/ou au moins un accumulateur de chaleur thermochimique.

4. Système d'utilisation de l'énergie solaire selon la revendication 3, **caractérisé en ce que** de l'eau est utilisée dans un accumulateur de chaleur sensible et/ou dans un dispositif de stockage de chaleur latente (3), en particulier un accumulateur de glace.

5. Système d'utilisation de l'énergie solaire selon au moins l'une quelconque des revendications précédentes, **caractérisé en ce que** ledit au moins un dispositif de pompe à chaleur (2) comprend une pompe à chaleur à compression, une pompe à chaleur à absorption ou une pompe à chaleur à adsorption.

6. Système d'utilisation de l'énergie solaire selon au moins l'une quelconque des revendications précédentes, **caractérisé en ce que** ledit au moins un dispositif de stockage de chaleur (3) fournit de l'énergie thermique au moins partiellement à un réseau de chauffage local ou à distance.

7. Procédé d'utilisation de l'énergie solaire pour des zones aéroportuaires (10), à savoir des aires de stationnement, dans lequel
un dispositif de source de chaleur (1) extrait de l'énergie thermique induite par le rayonnement solaire du matériau ou du matériau composite de l'aire de stationnement (10), et puis au moins
un stockage dans un dispositif d'accumulation thermique (3) pour stocker temporairement l'énergie thermique,
un dispositif de chauffage (31) pour chauffer au moins un bâtiment, en particulier un bâtiment d'aéroport,
un dispositif de refroidissement (32) est actionné,
un dispositif de production d'électricité (33) est actionné et/ou
un dispositif de pompe à chaleur (2) est actionné pour augmenter la température de l'énergie thermique obtenue avec le dispositif de source de chaleur (1), et le dispositif de source de chaleur (1) présentant un système de tuyaux, en particulier un système de tuyaux capillaires, un mélange eau-glycol étant utilisé en fonctionnement comme fluide thermique circulant dans le système de tuyaux, les tuyaux (4) du système de tuyaux étant disposés en moyenne entre 5 et 15 cm en dessous de la surface de l'aire de stationnement (10), et
le matériau ou le matériau composite de l'aire de stationnement (10) comprend du béton, l'épaisseur de l'aire de stationnement (10), dont le dispositif de source de chaleur (1) extrait de l'énergie thermique, étant comprise entre 20 cm et 80 cm, en particulier entre 30 et 40 cm, et
pour augmenter l'absorption de chaleur la zone aéroportuaire (10) présente au moins partiellement un revêtement ou une peinture réduisant la réflexion, en particulier pour le rayonnement à ondes courtes et un degré de réflexion inférieur à 25% pour le béton.

8. Procédé d'utilisation de l'énergie solaire selon la revendication 7, **caractérisé en ce que** le niveau de température de l'énergie thermique extraite est augmenté à l'aide d'un dispositif de pompe à chaleur (2) et que l'énergie thermique au niveau de température augmenté est fournie vers au moins un dispositif de stockage de chaleur (3) afin de stocker temporairement l'énergie thermique.

9. Procédé d'utilisation de l'énergie solaire selon la revendication 7, **caractérisé en ce que** le niveau de température de l'énergie thermique extraite est augmenté avec un dispositif de pompe à chaleur (2) et l'énergie thermique est fournie à un dispositif de refroidissement (32), en particulier à un dispositif de chaleur d'absorption.
